(19) Europäisches Patentamt

European Patent Office

Office européen des brevets

(11) **EP 1 453 240 A1**

(12) **EUROPEAN PATENT APPLICATION**
published in accordance with Art. 158(3) EPC

(43) Date of publication:
**01.09.2004 Bulletin 2004/36**

(51) Int Cl.⁷: **H04L 9/08**, G06F 17/60, G06F 15/00

(21) Application number: **02781849.1**

(22) Date of filing: **27.11.2002**

(86) International application number:
**PCT/JP2002/012356**

(87) International publication number:
**WO 2003/049362 (12.06.2003 Gazette 2003/24)**

(84) Designated Contracting States:
**AT BE BG CH CY CZ DE DK EE ES FI FR GB GR IE IT LI LU MC NL PT SE SK TR**

(30) Priority: **07.12.2001 JP 2001373674**

(71) Applicant: **Sony Corporation Tokyo 141-0001 (JP)**

(72) Inventor: **Ishii, Hidehiro Shinagawa-ku, Tokyo 141-0001 (JP)**

(74) Representative: **Horner, David Richard D Young & Co, 21 New Fetter Lane London EC4A 1DA (GB)**

(54) **INFORMATION PROCESSING APPARATUS AND METHOD**

(57) When reproducing content, a client reads attribute information defined in the header of content data corresponding to a content ID specified by a user. When the read attribute information meets an attribute condition defined in a license stored in a storage unit defining the attribute condition, the encrypted content data is decrypted and output.

After the content is distributed, a collected edition or a best edition can be newly released without creating new content by issuing the license having an attribute condition that limits, for example, a release data and an artist. Defining a license with a specific subscription ID as the attribute condition allows the user with the license to use new release content with the subscription ID without additional purchase of a license.

FIG. 8

START REPRODUCING PROCESSING BY CLIENT

S41 READ ATTRIBUTE INFORMATION OF CONTENT SPECIFIED BY USER

S42 LICENSE SATISFYING ATTRIBUTE CONDITION CORRESPONDING TO READ ATTRIBUTE INFORMATION IS ACQUIRED? → No → S43 DISPLAY MESSAGE PROMPTING ACQUISITION OF LICENSE

↓ Yes

S44 LICENSE IS UNEXPIRED? → No → S45 DISPLAY MESSAGE PROMPTING UPDATE OF LICENSE

↓ Yes

S46 READ STORED CONTENT

S47 SIGNATURES OF LICENSE AND CONTENT ARE VALID? (VERIFY SIGNATURES OF LICENSE AND CONTENT WITH PUBLIC KEY OF LICENSE SERVER) → No

↓ Yes

S48 DECRYPT CONTENT

S50 ERROR PROCESSING

S49 OUTPUT CONTENT

END

EP 1 453 240 A1

## Description

Technical Field

The present invention relates to information processing apparatuses and methods, and more particularly to an information processing apparatus and a method for preventing unauthorized copying and using of content that is not licensed from a copyright holder.

Background Art

Recently, systems have been realized for exchanging music data for free among a plurality of users in which a user provides his/her own music data to other users via the Internet and receives other users' music data that the user does not have.

Theoretically, only with the presence of one piece of music data and another piece of content, such systems allow the other users to take advantage of them. Because of this, many users do not purchase the content, causing a copyright holder to lose their chance to obtain royalties that the copyright holder deserves.

Accordingly, there are systems in which the content to be distributed is encrypted and the license for using the content is separately provided, so that the encrypted content cannot be decrypted and reproduced without the license corresponding to the encrypted content.

This enables the content to be freely distributed while the copyright of the copyright holder is protected.

However, the above system has difficulties in flexibly establishing a correspondence between the license and the content, and difficulties in newly distributing the content to which the already-distributed license can be applied.

Disclosure of Invention

In view of such cases, the present invention is made in order to allow content to be freely distributed and circulated and in order to freely establish a set of pieces of content that can be used in accordance with a license.

A first information processing apparatus of the present invention includes content receiving means for receiving content including encrypted content data and attribute information; content storage means for storing the content; license receiving means for receiving a license including an attribute condition defining a condition regarding the attribute information on a piece of the content that can be used; license storage means for storing the license; determining means for determining whether the attribute information on the piece of the content meets the attribute condition of the license stored in the license storage unit; decrypting means for decrypting the encrypted content data of the piece of the content based on the determination of the determining means that the attribute information on the piece of the content meets the attribute condition of the license; and outputting means for outputting the content data decrypted by the decrypting means.

The content can further include a content key for decrypting the content data.

The attribute information can include a combination of an attribute item and an attribute value.

The attribute item can include information on a record company, an artist, a release date, a content provider, a genre, a subscription, and a label.

The attribute condition can include a combination of an attribute item, an attribute value, and an operator.

A second information processing apparatus of the present invention includes receiving means for receiving a license request including a license ID for uniquely identifying the license including the attribute condition defining the condition regarding the attribute information included in the content; storage means for storing the license along with the license ID; obtaining means for obtaining the license corresponding to the license ID included in the license request; signature means for adding a digital signature to the license; and sending means for sending the license with the signature added thereto by the signature means.

The information processing apparatus can further include license processing means for attaching a terminal ID to the license obtained by the obtaining means.

A third information processing apparatus of the present invention includes storing means for storing content including encrypted content data and attribute information; receiving means for receiving a content request including a content ID for uniquely identifying the content; and sending means for sending a piece of content corresponding to the content ID included in the content request, wherein the attribute information included in the piece of the content is information used for determining whether an attribute condition of the license is met when the piece of the content is used and the attribute condition of the license is information defining a condition regarding the attribute information on the piece of the content that can be used.

An information processing method of the present invention includes a content receiving step of receiving content including encrypted content data and attribute information; a content storing step of storing the content; a license receiving step of receiving a license including an attribute condition defining a condition regarding the attribute information on a piece of the content that can be used; a license storing step of storing the license; a determining step of determining whether the attribute information on the piece of the content meets the attribute condition of the license stored at the license storing step; a decrypting step of decrypting the encrypted content data of the piece of the content based on the determination at the determining step that the attribute information on the piece of the content meets the attribute condition of the license; and an outputting step of outputting the content data decrypted at the decrypting step.

A program of the present invention is a program which causes a computer to execute a content receiving step of receiving content including encrypted content data and attribute information; a content storing step of storing the content; a license receiving step of receiving a license including an attribute condition defining a condition regarding the attribute information on a piece of the content that can be used; a license storing step of storing the license; a determining step of determining whether the attribute information on the piece of the content meets the attribute condition of the license stored at the license storing step; a decrypting step of decrypting the encrypted content data of the piece of the content based on the determination at the determining step that the attribute information on the piece of the content meets the attribute condition of the license; and an outputting step of outputting the content data decrypted at the decrypting step.

A program storage medium of the present invention contains a program to cause a computer to execute a content receiving step of receiving content including encrypted content data and attribute information; a content storing step of storing the content; a license receiving step of receiving a license including an attribute condition defining a condition regarding the attribute information on a piece of the content that can be used; a license storing step of storing the license; a determining step of determining whether the attribute information on the piece of the content meets the attribute condition of the license stored at the license storing step; a decrypting step of decrypting the encrypted content data of the piece of the content based on the determination at the determining step that the attribute information on the piece of the content meets the attribute condition of the license; and an outputting step of outputting the content data decrypted at the decrypting step.

Brief Description of the Drawings

Fig. 1 is a block diagram showing a construction of a content providing system to which the present invention is applied.

Fig. 2 is a block diagram showing a construction of a client in Fig. 1.

Fig. 3 is a flowchart illustrating content download processing by the client in Fig. 1.

Fig. 4 is a flowchart illustrating content providing processing by a content server in Fig. 1.

Fig. 5 is a diagram showing an example data format. Fig. 6 is a diagram illustrating types of attribute items.

Fig. 7 is a diagram showing a license structure.

Fig. 8 is a flowchart illustrating reproduction processing by the client.

Fig. 9 is a flowchart illustrating license acquisition processing.

Fig. 10 is a flowchart illustrating license acquisition processing.

Fig. 11 is a flowchart illustrating license acquisition processing.

Fig. 12 is a flowchart illustrating details of the license acquisition processing.

Fig. 13 is a flowchart illustrating content data obtaining processing.

Fig. 14 is a diagram illustrating a key structure.

Fig. 15 is a diagram illustrating a relationship between the key structure and a license.

Fig. 16 is a diagram illustrating license granting processing by a license server.

Best Mode for Carrying Out the Invention

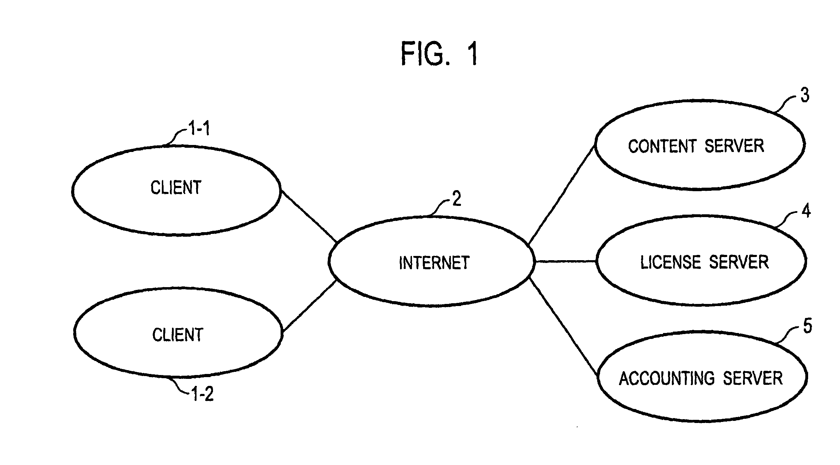

Fig. 1 shows a construction of a content providing system to which the present invention is applied. Clients 1-1 and 1-2 (hereinafter, referred to simply as client 1 when each of the clients does not have to be distinguished from one another) are linked to the Internet 2. Although only two clients are shown in this example, an arbitrary number of clients are linked to the Internet 2.

The Internet 2 is also linked to at least one content server 3 providing content to the client 1; at least one license server 4 granting the client 1 a license required for using the content provided from the content server 3; and at least one accounting server 5 performing an accounting process for the client 1 when the license is granted to the client 1.

The numbers of these at least one content servers 3, at least one license servers 4, and at least one accounting servers 5 linked to the Internet 2 are also arbitrary.

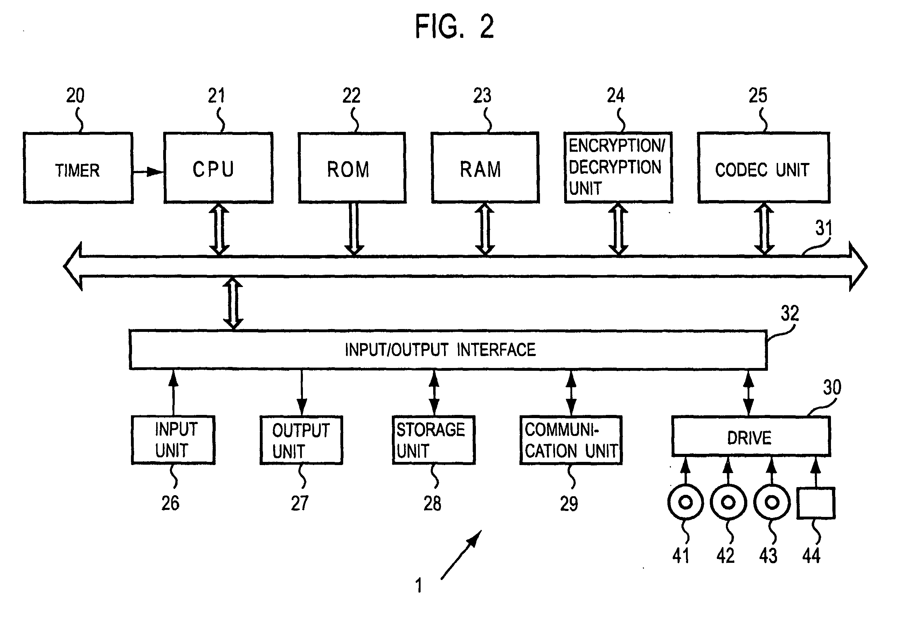

Fig. 2 shows a construction of the client 1.

In Fig. 2, a CPU (Central Processing Unit) 21 executes various processes in accordance with the programs stored in a ROM (Read Only Memory) 22 or loaded from a storage unit 28 to a RAM (Random Access Memory) 23. A timer 20 performs clocking to provide time information to the CPU 21. The RAM 23 also appropriately stores data and the like required for causing the CPU 21 to execute various processes.

An encryption/decryption unit 24 encrypts content data and decrypts already-encrypted content data. A codec unit 25 uses, for example, ATRAC (Adaptive Transform Acoustic Coding) 3 mode to encode the content data, which is provided via an input/output interface 32 to and stored in a semiconductor memory 44 that is connected to a drive 30.

The semiconductor memory 44 includes, for example, a memory stick (Trade Mark).

The CPU 21, ROM 22, RAM 23, encryption/decryption unit 24, and codec unit 25 are interconnected via a bus 31. The input/output interface 32 is also connected to this bus 31.

The input/output interface 32 includes an input unit 26 including a keyboard and a mouse; an output unit 27 including a display such as a CRT and a LCD and a speaker; a storage unit 28 including a hard disk; and a communication unit 29 including a modem and a terminal adapter. The communication unit 29 performs a communication process via the Internet 2. The communication unit 29 also performs analog signal or digital signal communication processing with another client.

If necessary, the input/output interface 32 is also connected to the drive 30 on which a magnetic disk 41, optical disk 42, magneto-optic disk 43, or semiconductor memory 44 is appropriately mounted. If necessary, a computer program read from them is installed in the storage unit 28.

Although not shown, the content server 3, the license server 4, and the accounting server 5 each have primarily the same construction as that of the client 1 shown in Fig. 2.

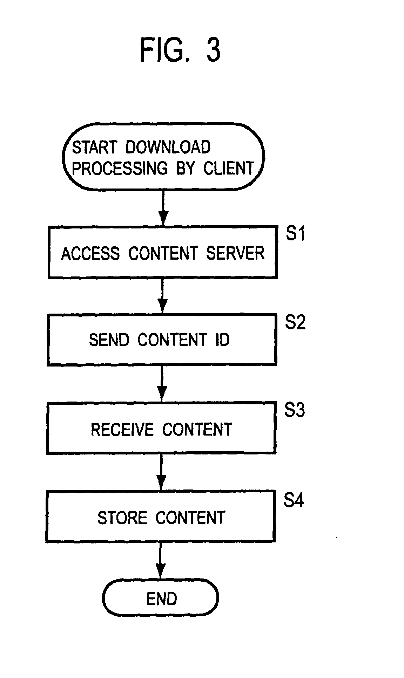

Next, processing will be described with reference to the flowchart in Fig. 3 in which the client 1 receives the content from the content server 3.

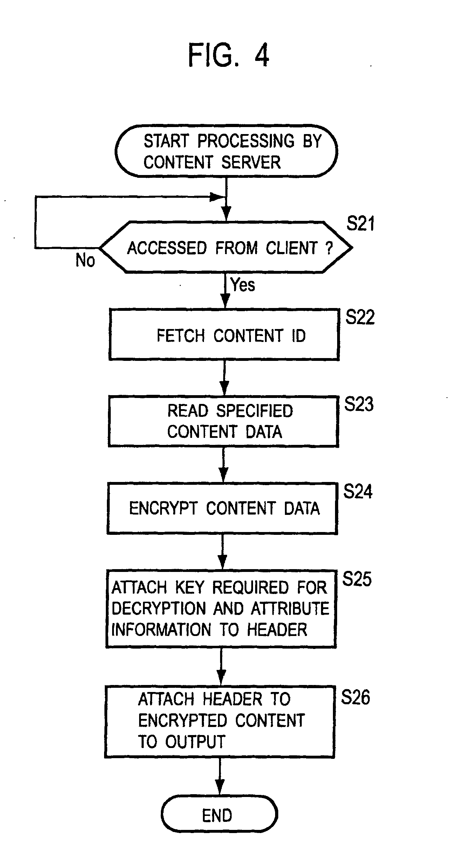

When a user operates the input unit 26 to request access to the content server 3, the CPU 21 controls the communication unit 29 to have access to the content server 3 via the Internet 2. At step S2, when the user operates the input unit 26 to specify content to be provided, the CPU 21 receives specification information and sends the content ID of the specified content from the communication unit 29 to the content server 3 via the Internet 2. As described below with reference to the flowchart in Fig. 4, the content server 3 that receives this sends the content including the encrypted content data corresponding to the sent content ID. Accordingly, the CPU 21 receives this content via the communication unit 29 at step S3, and the content is provided to the storage unit 28 including a hard disk where it is stored.

Next, content providing processing by the content server 3 that is the counterpart of the above-described processing by the client 1 will be described with reference to the flowchart in Fig. 4. The construction of the client 1 in Fig. 2 is also applied to that of the content server 3.

At step S21, the CPU 21 of the content server 3 waits for access from the client 1 via the communication unit 29 from the Internet 2. When determining the occurrence of the access, the CPU 21 proceeds to step S22 where the content ID specifying the content sent from the client 1 is obtained. The content specification information is the content ID sent at step S2 in Fig. 3.

At step S23, the CPU 21 of the content server 3 reads the content specified with the information obtained by the process at step S22 from among the pieces of content data stored in the storage unit 28. The CPU 21 provides the content data read from the storage unit 28 at step S24 to the encryption/decryption unit 24 where the content data is encrypted.

Since the codec unit 25 has already encoded the content data stored in the storage unit 28 by means of the ATRAC3 mode, this encoded content data is to be encrypted.

Alternatively, the content data that is encrypted in advance can be stored in the storage unit 28. In this case, the process at step 24 can be skipped.

Next, at step S25, the CPU 21 of the content server 3 adds a key required for decrypting the encrypted content data and attribute information representing various information regarding the content to a header that includes a format for sending the encrypted content data. At step S26, the CPU 21 of the content server 3 sends the content, which is obtained by formatting the content data encrypted by the process at step S24 and the header having the attribute information and the digital signature attached thereto by the process at step S25, to the client 1 that has access via the Internet 2 from communication unit 29.

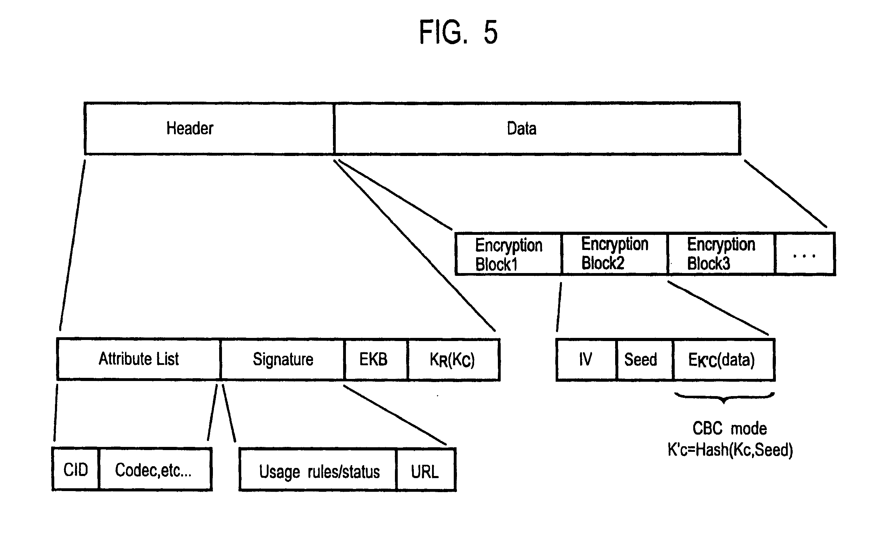

Fig. 5 shows the format configuration when the content server 3 provides the content to the client 1 in this manner. As shown in the figure, this format includes the header and data.

In the header, there are disposed attribute information (attribute list), a digital signature which is added to the attribute information with the encryption key of the license server, an enabling key block (EKB), and a content key Kc (KR (Kc)) encrypted with a root key KR obtained by decrypting the EKB with the DNK.

In the attribute information, there is a plurality of descriptions of attribute entries each including a combination of an attribute item and the corresponding attribute value.

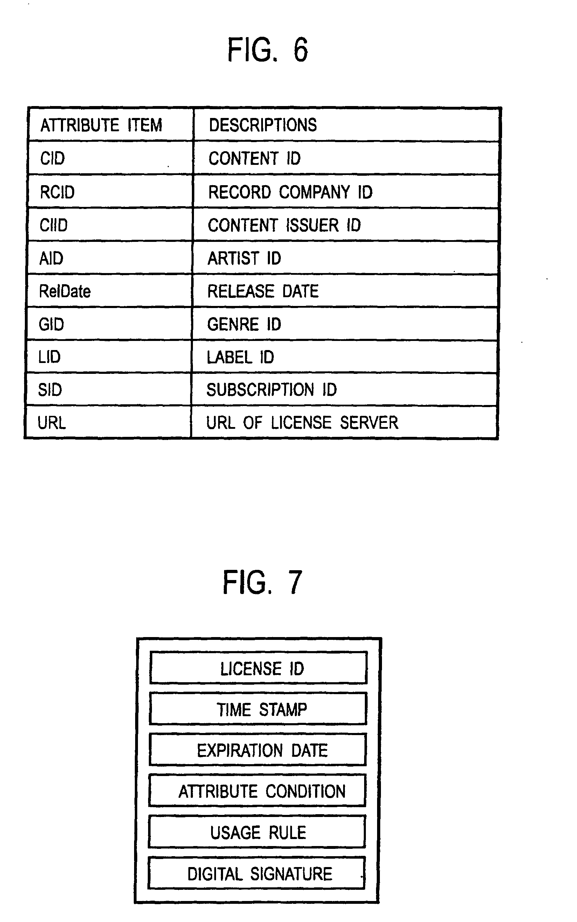

Fig. 6 shows types of the attribute items. CID, RCID, CIID, AID, GID, and LID are IDs uniquely identifying content, a record company, a content issuer, an artist, a genre, and a label. RelDate represents the release date of the content; the subscription ID is an attribute item used for the subscription license described below.

The URL represents address information that is accessed when the license is obtained to use the content. Specifically, in the case of the system in Fig. 1, it is the address of the license server 4 required for receiving the license.

The data includes an arbitrary number of encryption blocks; the encryption blocks each include an initial vector (IV (Initial vector)), a Seed, and data EK'c (data) obtained by encrypting the content data with a key K'c.

The key K'c is a value computed by applying the content key Kc and a Seed value determined with a random number to a hash function, as shown in the following expression:

$$K'c = Hash (Kc, Seed).$$

The initial vector IV and the seed of each encryption block are determined to take different values.

This encryption is performed by dividing the content data in units of eight bytes to encrypt the content data in units of eight bytes. Encryption of subsequent eight-byte data is performed using a CBC (Cypher Block Chaning) mode which is performed by utilizing the result of encryption of the previous eight-byte data.

In the case of the CBC mode, when the first eight bytes of the content data are encrypted, there is no previous eight-byte data. The encryption is therefore performed using the initial vector IV as the initial value when the first eight bytes are encrypted.

Even though one encryption block is broken, the effects are prevented from reaching other encryption blocks because of the encryption using the CBC mode.

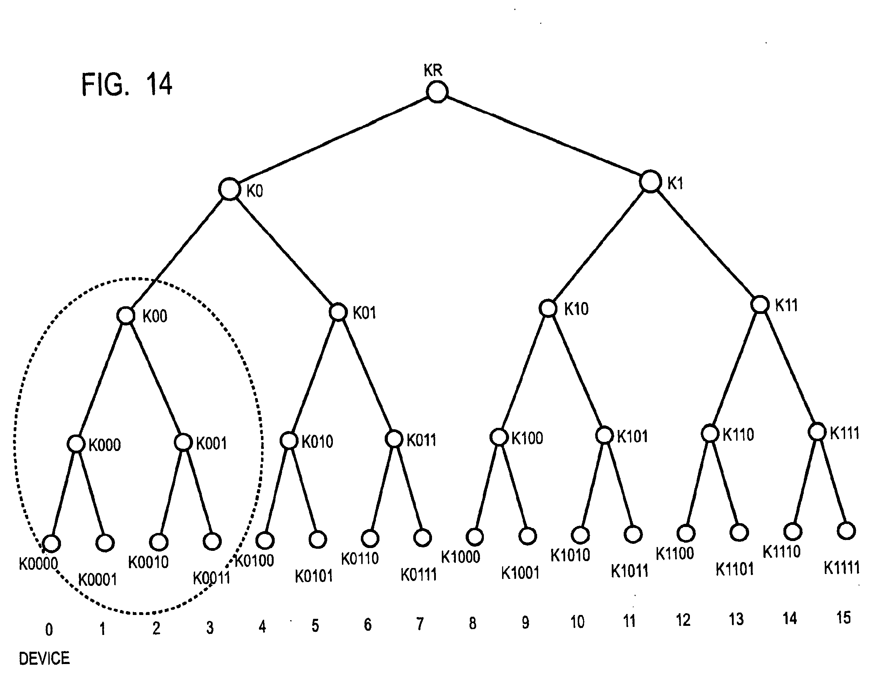

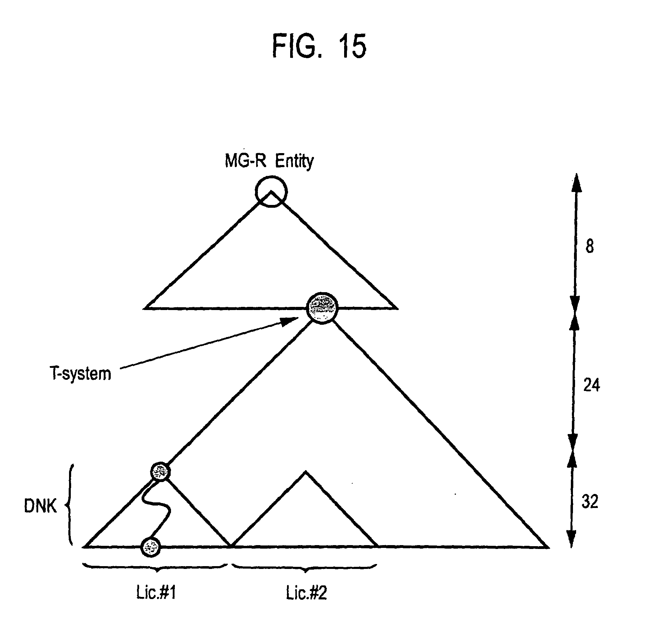

This encryption will be described below with reference to Figs. 14 and 15.

Thus, the client 1 can receive the content from the content server 3 without charge and restriction.

However, each client 1 needs to acquire the license when using the obtained content.

Acquiring the license, the client 1 registers online or offline in advance at the license server to obtain service data. The service data includes a device node key (DNK) and a terminal ID, which serve to decrypt the EKB. The service data and the license obtained from the license server are securely stored in the storage unit 28 of the client 1.

Fig. 7 shows the configuration of the license. The license includes a license ID, a timestamp, an expiration date, an attribute condition, a usage rule, and the digital signature, whereby the digital signature is added to these with the secret key of the license server; the timestamp represents the day of issue of the license; the expiration date represents the time limit up to when the license can be used and after which the license is expired; the attribute condition is the attribute condition of the content that the client 1 can utilize with the corresponding license, attribute condition which is represented with a conditional expression including a combination of an attribute item, the value corresponding to the attribute item, a comparison operator, and a logic operator; the usage rule represents a rule description for using the content to which the license can be applied, and it includes the same terminal ID as the one included in the service data.

Hereinafter, there will be shown an example license configuration that can be realized with a combination of the attribute information included in the content and the attribute condition included in the license.

The attribute information of the content c1 is defined as follows:

c1: cid = {1}, aid = {0,1}, reldate = year 2000 November 10th

This means that the content ID is 1, the artist IDs are 0 and 1 (i.e., a collaboration of the artists of the artist ID 0 and the artist ID 1), and the release date is year 2000, November 10th.

Likewise, the attribute information of content c2, c3, and c4 will be defined as follows:

c2: cid = {2}, aid = {0}, reldate = year 2000 December 20th
c3: cid = {3}, aid = {0}, reldate = year 2001 March 1st
c4: cid = {4}, aid = {0}, reldate = year 2001 October 21st

On the other hand, the attribute condition of the license 11 is defined as follows:

$$11: 1 \in cid \lor 2 \in cid$$

The right of use r1 corresponds to the content c1 and c2. In other words, the terminal with the right of use r1 allows the content c1 and c2 to be used.

The attribute condition of the license 12 is defined as follows:

$$12: 0 \in aid \land (\text{year 2001 January 1st} < reldate < \text{year 2001 December 31st})$$

This means a condition that represents the content released by the artist of the ID 0 during year 2001. The license 12 corresponds to the content c3 and c4. At this point in time, the content c3 and c4 can be used at the terminal acquiring the license 12. It is assumed that content c5 with the following attribute information is provided afterwards.

c5: cid = {5}, aid = {0}, reldate = {year 2001 December 1st}

When this content is obtained by means of download or the like from the content server 3, the client 1 that has already acquired the license 12 can use the content c5 without another access to the license server or the like.

When a distributor attempts to newly provide a combination of the content c1, c2, and c5 as a best edition, which is followed by the distribution thereof, issuing the following license 13 accommodating this situation enables the best edition to be provided without the creation of new content and with direct use of the content already distributed or in circulation.

$$13: 1 \in cid \lor 2 \in cid \lor 5 \in cid$$

Thus, the right of use obtained by combining the content already distributed and the content in circulation can be newly provided with ease. For example, by issuing a license with an attribute condition that limits the release date and the artist, a collected edition including works during a specific period by a certain artist can be newly provided.

By issuing a license with an attribute condition limiting the artist, a collected edition of a certain group (including works by the group and solo works of members of the group) can be newly provided.

Next, there will be described an example that defines, as a subscription service, a license that permits additional use of some of the new releases every month.

The attribute condition of the license 14 is defined as follows:

14: $3 \in cid \vee 4 \in cid \vee 1 \in sid$

For the client 1 acquiring this license 14, the content c3 and c4 that are already provided can be used. It is assumed that content c6 and c7 with the following attribute information are provided as new releases the next month.

C6: cid = {6}, sid = {1}
C7: cid = {7}, sid = {1}

In this case, the client 1 with the license 14 can use the content c6 and c7 without the necessity of purchasing a new license. Likewise, by providing the content with the subscription ID of 1 each month, without purchasing another license, the client 1 with the license 14 can add the content that can be used.

Thus, by representing the attribute condition as a combination of the attribute item, the attribute value, and the operator, such as the logic operator and a relational operator, a set of the content that can be used is able to be flexibly set.

The operators included in the attribute condition are not limited to the ones described here, and thus various types of other operators can be used.

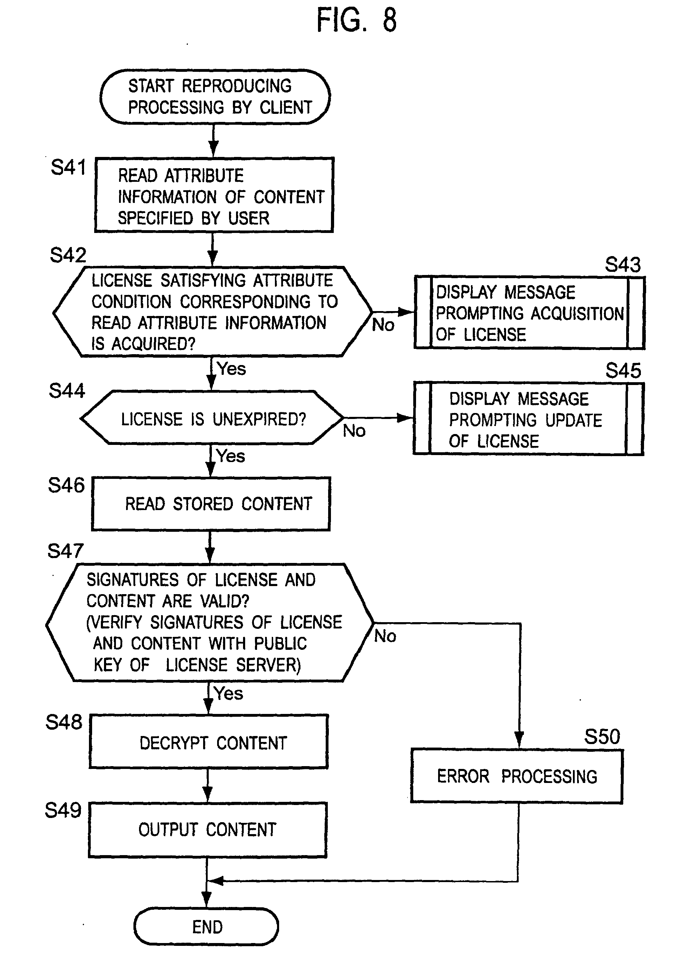

Processing will be described with reference to Fig. 8 when the client 1 reproduces the content.

At step S41, the CPU 21 of the client 1 obtains the content ID that is specified by the user through the operation of the input unit 26.

The CPU 21 reads the attribute information defined in the header of the content data corresponding to the obtained content ID.

Next, the CPU 21 proceeds to step S42 where the CPU 21 determines whether any license whose attribute condition defined therein is satisfied with the attribute information read at step S41 is already acquired and stored in the storage unit 28 by the client 1. When such a license cannot be found, the CPU 21 proceeds to step S43 where the CPU 21 causes a message prompting the acquisition of the license to be shown via the output unit 27 on the display.

When it is determined at step S42 that the license is already acquired, the CPU 21 proceeds to step S44 where the CPU 21 determines whether the acquired license is expired. Whether the license is expired is determined by comparing the expiration date specified as a description of the license and the present time clocked by the timer 20. When it is determined that the expiration date is already reached, the CPU 21 proceeds to step S45 where license update processing is performed. The details of this license update processing will be described with reference to the flowchart in Fig. 8.

When it is determined at step 44 that the license is still unexpired, or when the license is updated at step S45, the CPU 21 proceeds to step S45 where the CPU 21 verifies the digital signature included in the header of the content and the digital signature in the license with the public key of the license server 4. When the verification result of the digital signature proves that the digital signature is valid, the CPU 21 proceeds to step S46 where the CPU 21 reads the encrypted content data from the storage unit 28 and stores it in the RAM 23. At step S47, the CPU 21 provides the encryption block data stored in the RAM 23 in units of encryption blocks disposed in the Data in Fig. 5 to the encryption/ decryption unit 24 where the encryption block data is decrypted.

Furthermore, the CPU 21 provides the content data decrypted by the encryption/decryption unit 24 at step S48 to the codec unit 25 where the decrypted data is decoded. The CPU 21 provides the data decoded by the codec unit 25 from the input/output interface 32 to the output unit 27 where the decoded data is D-A converted for output from a loudspeaker.

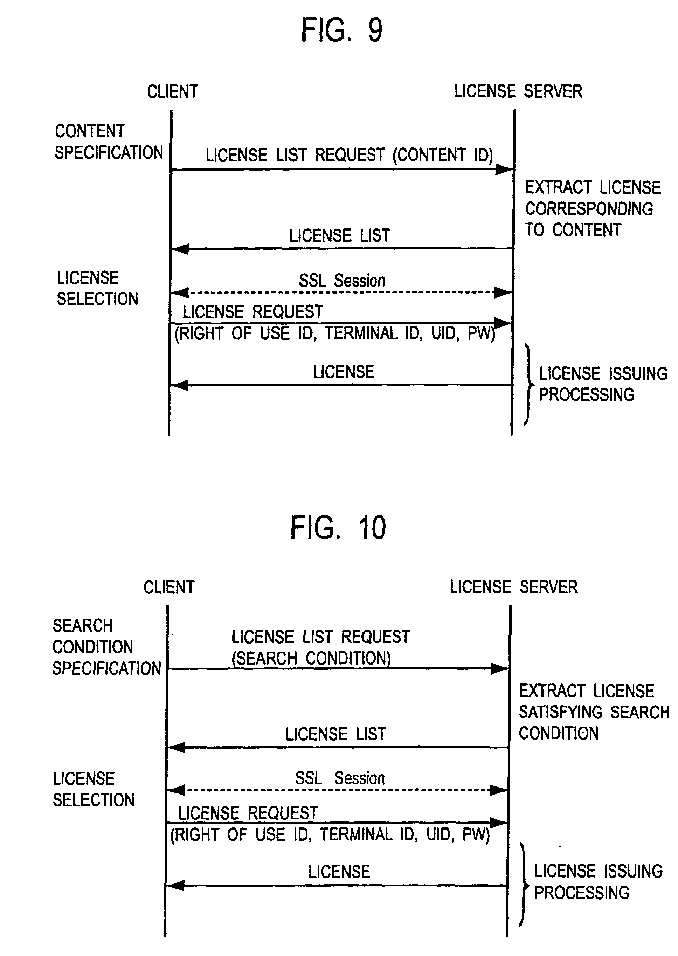

Processing will be described with reference to Figs. 9 to 11 in which the client acquires the license from the license server 4.

Fig. 9 shows license acquisition processing when a user of the client 1 determines the content to be used. When issuing of a license list is requested to the license server 4 in response to the specification of the content through the operation of the input unit 26 by the user, the CPU 21 controls the communication unit 29 to send the request of the license list including the content ID of the specified content to the content server 3 via the Internet 2. When receiving the license list request, the license server 4 extracts the licenses that can be applied to the content corresponding to the content ID included in the received license list and sends the client 1 the license list in which the license ID, the license name, the condition of the content to be used, the list of content can be used currently, the working conditions of the content, and the like of each of the licenses are defined.

When the client 1 receives the license list from the license server 4, the CPU 21 displays information on each license included in the license list on the output unit 27. When the user selects a desired license by referring to the information, the CPU 21 controls the communication unit 29 to establish a session by means of a two-way authentication, such as SSL. Subsequently, a license request including the license ID, the terminal ID, the user ID for accounting, and the password of the selected license is encrypted to be sent to the content server 3 via the Internet 2. When receiving the license request sent from the client 1, the license server 4 performs license issuing processing, described later, and sends the client 1 the license corresponding to the license ID included in the license request. When receiving the license sent from the license server 4, the client 1 encrypts the received license and so on to be stored in a secure state in the storage unit 28.

As described above, the user can acquire the license for using the content which the client 1 already has obtained. Alternatively, when the user performs an operation of reproducing the content that the client obtains and when the license for reproducing the content is not acquired, the above license acquisition processing may be automatically started.

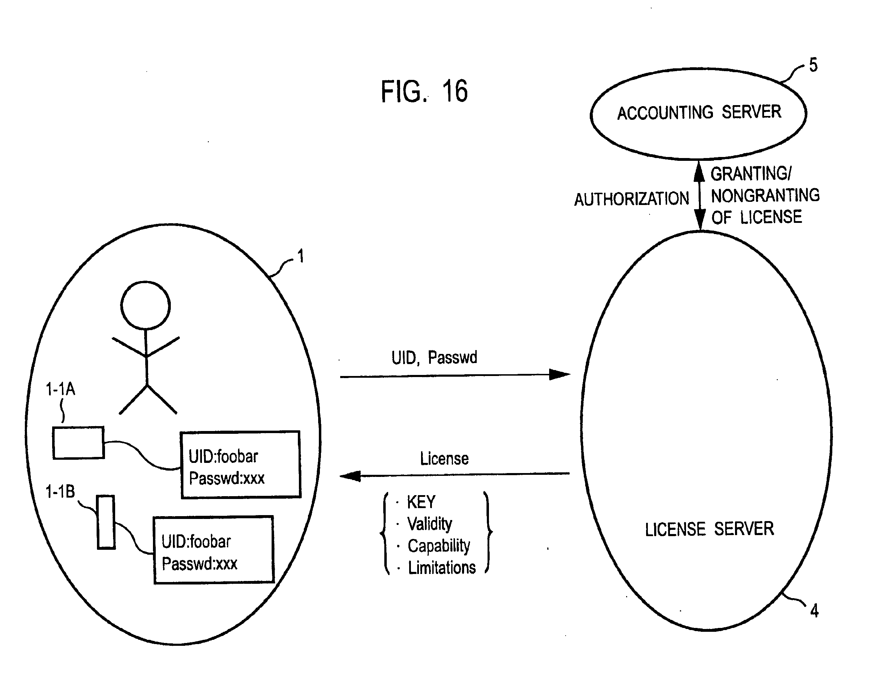

Next, processing is shown in Fig. 16 in which the user specifies various search conditions to search for the license and acquire it. Initially, in order to search for a user's desired license, the user operates the input unit 26 to specify the search condition, such as the license name, the license type, the title of the content to which the license can be applied, the album name, the genre, the artist name, and the release date. The CPU 21 controls the communication unit to send the content server 3 the license request including data obtained by formatting the input search condition. When receiving the license list request sent from the client 1, the content server searches for the licenses satisfying the search condition included in the license list request from the storage unit 28, and the license list including information on each of the licenses, such as the license ID, is sent to the client 1.

When the client 1 receives the license list from the license server 4, the CPU 21 causes information on each of the licenses included in the license list to be shown on the output unit 27. When the user selects a desired license by referring to the information, the CPU 21 controls the communication unit 29 to establish a session by means of the two-way authentication, such as the SSL. Subsequently, the license request including the license ID, the terminal ID, the user ID for accounting, and the password of the selected license is encrypted to be sent via Internet 2 to the content server 3. Receiving the license request sent from the client 1, the license server 4 performs the license issuing processing, described later, and then sends the client 1 the license corresponding to the license ID included in the license request. When receiving the license sent from the license server 4, the client 1 encrypts the received license to be stored in a secure state in the storage unit 28.

As described above, the user can search for the desired license and acquire it.

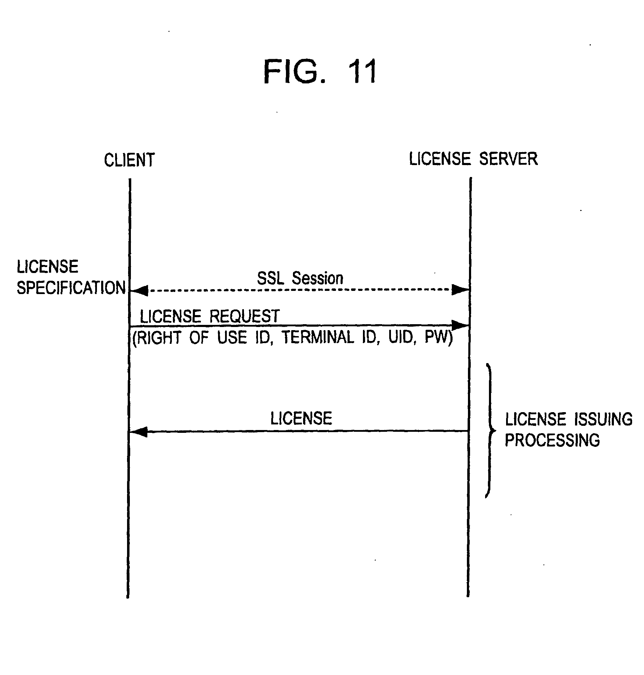

Next, the license acquisition processing is shown in Fig. 11 in a case in which the user knows the license ID of the desired license.

When the user operates the input unit 26 to specify the license ID of the desired license, the CPU 21 controls the communication unit 29 to establish a session by means of the two-way authentication, such as SSL. Subsequently, the license request including the license ID, the terminal ID, the user ID for accounting, and the password of the selected license is encrypted and sent via the Internet 2 to the content server 3. When receiving the license request sent from the client 1, the license server 4 performs the license issuing processing, described later, and then sends the client 1 the license corresponding to the license ID included in the license request. When receiving the license sent from the license server 4, the client 1 encrypts the received license or the like to be stored in a secure state in the storage unit 28.

The user knows the license ID from license advertisements inserted in magazines or the like and can acquire the desired license in the above-described manner by specifying the license ID.

Alternatively, the license acquisition processing may start by allowing the user to perform selection or the like by clicking to URL link information on the license server including the license IDs inserted in HTML files of Web sites, e-mail, and the like.

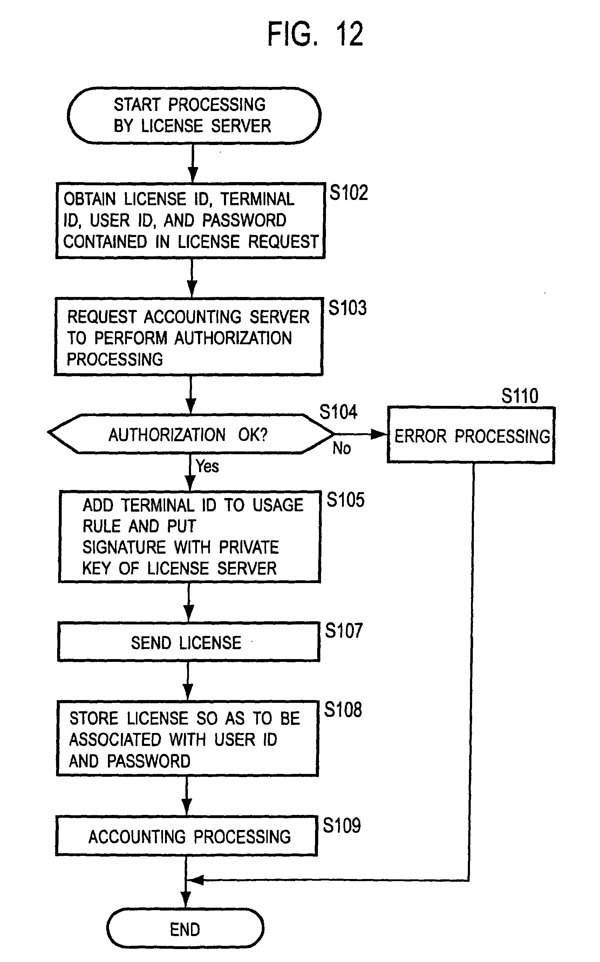

The details of the license issuing processing in Figs. 9 to 11 will be described with reference to the flowchart in Fig. 12. In this case again, the construction of the client 1 in Fig. 2 is applied to the construction of the license server 4.

Initially, at step S102, the CPU 21 obtains the license ID, the terminal ID, the user ID, and the password included in the license request.

The CPU 21 of the license server 4 has access to the accounting server 5 via the communication unit 29 to request authorization processing of the user corresponding to the user ID and the password. When receiving a request of the authorization processing via the Internet 2 from the license server 4, the accounting server 5 checks the track record of the past payments of the user corresponding to the user ID and the password to determine whether the user has a record of no payment for the value of the license in the past. When the user does not have such a record, the result of the authorization that permits the grant of the license is sent. When the user has the record of "no payment", the result of the authorization that does not permit the grant of the license is sent.

At step S104, the CPU 21 of the license server 4 determines whether the result of the authorization from the accounting server 5 permits the grant of the license. When the grant of the license is permitted, the CPU 21 proceeds to step S105 where the license corresponding to the license ID is acquired from a database. The terminal ID is inserted into the usage rule field of the license and the digital signature is generated with the private key of the license server 4 to be attached.

At step S107, the CPU 21 of the license server 4 sends the license with the terminal ID and the digital signature attached from the communication unit 29 via the Internet 2 to the client 1.

At step S108, the CPU 21 of the license server 4 stores the license just sent at step S107 in the storage unit 28 in such a manner that the license is associated with the user ID and the password obtained by the process at step S102. In addition, the CPU 21 executes the accounting processing at step S109. To be specific, the CPU 21 requests the accounting server 5 via the communication unit 29 to perform the accounting processing on the user corresponding to the user ID and the password. The accounting server 5 performs the accounting processing on the user based on this accounting request. As described above, when the user does not pay in response to this accounting processing, the user is not able to receive the license afterwards even though the grant of the license is requested.

In other words, since the authorization result that does not permit the grant of the license is sent from the accounting server 5 in this case, the CPU 21 proceeds from step S104 to step S110 where error processing is performed. To be specific, the CPU 21 of the license server 4 displays a message notifying the client 1, controlling the communication unit 29 to have access, that the grant of the license is unable to be permitted, and then the process is terminated.

In this case, as described above, being unable to receive the license, the client 1 cannot use the content.

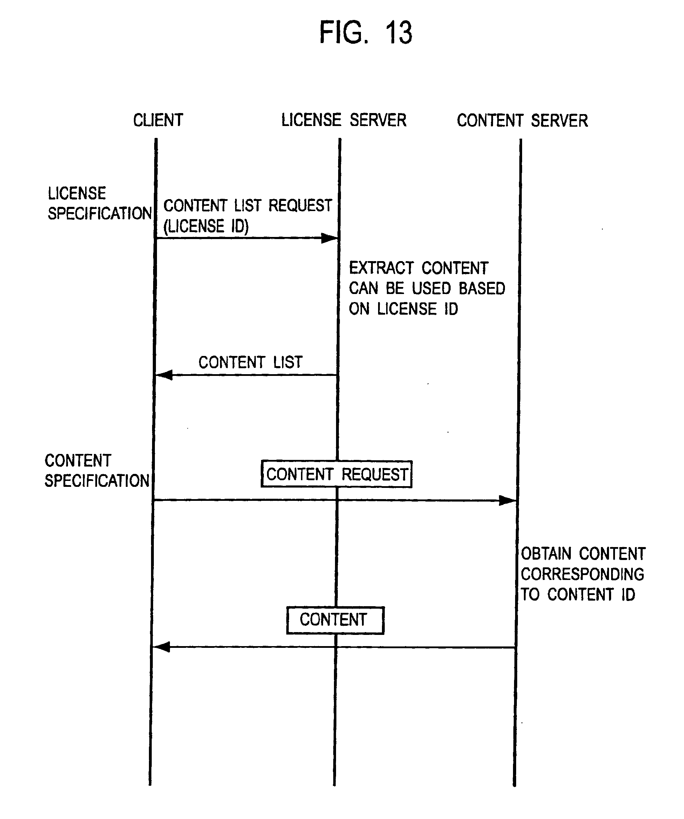

Next, processing will be described with a reference to Fig. 13 in which the content data of the content to which the license can be applied is obtained.

When the user operates the input unit 26 to select the license, the CPU controls the communication unit 29 to send the content list request including the license ID of the selected license to the content server 3 via the Internet 2. When receiving the content list request, the license server 4 obtains the license ID included in the content list request. The license server 4 can extract the content to which the corresponding license can be applied, with the license ID as the key, from a license database. Subsequently, the license server sends the client 1 the content list including content information, such as the content ID, the URL for downloading the content, the content name, the artist name, and the genre of each piece of the extracted content.

Controlling the output unit to receive the content list, the client 1 displays the content information of each piece of the content included in the content list. When the user selects the content to be downloaded by referring to the displayed content information, the client 1 sends the content request to the content server 3 in accordance with the URL of the content. When receiving the content request, the content server sends the client 1 the content with the content ID included in the content request. The client 1 receives the content from the content server 3 and stores the received content in the storage unit 28.

As described above, the user retrieves the content to which the license is capable of being applied and causes the client to download from the content server 3.

Fig. 14 shows a key constructing method when Broadcast Encryption is adopted as a key management system. As shown in Fig. 14, keys take a hierarchical tree structure whose lowest layer leaves each correspond to devices. In an example in Fig. 14, keys corresponding to sixteen devices, numbered 0 to 15, are produced.

Keys are each specified so as to correspond to the node indicated with a circle in the figure. In this example, the root node at the top layer corresponds to a key KR, the nodes at the second layer correspond to keys K0 and K1, the nodes at the third layer correspond to keys K00 to K11, and the nodes at the fourth layer correspond to keys K000 to K111. The leaves(device nodes) which serve as the nodes at the bottom layer correspond to keys K0000 to K1111.

Because of the hierarchical structure, for example, the key K001 is regarded as the upper-layer key of the keys K0010 and K0011, and the key K00 is regarded as the upper-layer key of the keys K000 and K001. Likewise, the K0 is regarded as the upper-layer key of the keys K00 and K01, and the key KR is regarded as the upper-layer key of the keys K0 and K1.

The keys for utilizing the content are formed using the keys corresponding to the nodes of a path from a device node (leaf) at the bottom layer to the root node at the top layer. For example, the keys for utilizing the content of number 3 are formed using the keys of the path from the leaf to the root including the keys K0011, K001, K00, K0, and KR.

In the system of the present invention, as shown in, for example, Fig. 15, the hierarchical tree structure including keys corresponding to 8 x 24 x 32 stages of nodes are used. In this key system, categories correspond to the keys corresponding to nodes down to the lower eight stages from the root node. The category here indicates the category, such as the category of devices using a semiconductor memory, for example the memory stick, and the category of devices receiving a digital broadcast.

In the example in Fig. 15, a system of the present invention is applied to one node among the nodes from the root node down to the ones at the eighth stage. The licenses correspond to the keys that correspond to another twenty-four stages of lower layer nodes. This enables approximately 16 mega (= $2^{24}$ = approximately one million and six hundred thousand) of licenses to be defined. In addition, the lowest thirty-two stage layers enable approximately four Giga (= $2^{32}$ = approximately four billion) users to be defined. Keys corresponding to the nodes of the lowest thirty-two stages constitute DNK.

Each piece of the content corresponds to one of the paths constituted by nodes of sixty-four (=8+24+32) stages. In other words, encrypting each piece of the content uses the keys corresponding to the nodes constituting the assigned path. The key at an upper layer is encrypted using the key at a lower proximate layer and are disposed in the EKB in Fig. 5. Not being disposed in the EKB, the DNK at the bottom stage is disposed in the service data obtained at registration of the client to the license server and is provided to the user's client 1 as shown in Fig. 16.

The client 1 uses the DNK defined in the service data to decrypt the key at an upper proximate layer defined in the EKB distributed along with the content data. The client 1 uses the key obtained through the description to decrypt a key at a further upper layer included in the EKB. By sequentially performing the above-described process, the client 1 can obtain every key belonging to the path of the content.

The client 1 uses the KR obtained after the above EKB decryption processing to decrypt the encrypted content key KR(KC) and the content key KC can be obtained.

Alternatively, the keys in the present invention can be formed using keys other than the key system employing the Broadcast Encryption as shown in Figs. 14 and 15.

In place of so-called a personal computer, the client to which the present invention is applied can be a PDA (Personal Digital Assistants), a cellular phone, a game terminal, or the like.

When a series of processes is performed using software, the programs that constitute the software are installed from a network or storage media to a computer incorporated in dedicated hardware, a universal personal computer that can execute various features by installing various programs thereon, etc.

These storage media, which are distributed, as shown in Fig. 2, for providing the programs to the user, are formed using not only package medium involving the magnetic disk 41 (including a floppy disk), the optical disk 42 (including a CD-ROM (Compact Disk-Read Only Memory) and a DVD (Digital Versatile Disk)), a magneto-optic disk 43 (including an MD (Mini-Disk)), and a semiconductor memory 44, which are independent of the device itself and store the programs, but also the ROM 22 and the hard disk included in the storage unit 28, which are incorporated in the device beforehand to be provided to the user and store the programs.

In the present specification, steps defining the programs stored in the storage media, steps which are sequentially performed in accordance with the described order, may not be necessarily performed sequentially. The steps may include a process executed parallel or separately.

The system in the present specification represents the entirety of an apparatus including a plurality of the devices.

Industrial Applicability

As described above, an information processing apparatus, a method, a program storage medium, and a program according to the present invention format encrypted data and attribute information on content in accordance with a predetermined format to be output and causes a license to include an attribute condition. When the attribute information of the content meets the attribute condition of the license, since the encrypted data can be decrypted, the data is prevented from being used in an authorized manner while the license can be flexibly issued.

**Claims**

1. An information processing apparatus comprising:

content receiving means for receiving content including encrypted content data and attribute information;
content storage means for storing the content;
license receiving means for receiving a license including an attribute condition defining a condition regarding the attribute information on a piece of the content that can be used;
license storage means for storing the license;
determining means for determining whether the attribute information on the piece of the content meets the attribute condition of the license stored in the license storage unit;
decrypting means for decrypting the encrypted content data of the piece of the content based on the determination of the determining means that the attribute information on the piece of the content meets the attribute condition of the license; and
outputting means for outputting the content data decrypted by the decrypting means.

2. An information processing apparatus according to Claim 1, wherein the content further includes a content key for decrypting the content data.

3. An information processing apparatus according to Claim 1, wherein the attribute information includes a combination of an attribute item and an attribute value.

4. An information processing apparatus according to Claim 1, wherein the attribute item includes information on a record company, an artist, a release date, a content provider, a genre, a subscription, and a label.

5. An information processing apparatus according to Claim 1, wherein the attribute condition includes a combination of an attribute item, an attribute value, and an operator.

6. An information processing apparatus comprising:

receiving means for receiving a license request including a license ID for uniquely identifying the license including the attribute condition defining the condition regarding the attribute information included in the content;

storage means for storing the license along with the license ID;

obtaining means for obtaining the license corresponding to the license ID included in the license request;

signature means for adding a digital signature to the license; and

sending means for sending the license with the signature added thereto by the signature means.

7. An information processing apparatus according to Claim 6, further comprising license processing means for attaching a terminal ID to the license obtained by the obtaining means.

8. An information processing apparatus comprising:

storing means for storing content including encrypted content data and attribute information;

receiving means for receiving a content request including a content ID for uniquely identifying the content; and

sending means for sending a piece of content corresponding to the content ID included in the content request, wherein:

the attribute information included in the piece of the content is information used for determining whether an attribute condition of the license is met when the piece of the content is used; and

the attribute condition of the license is information defining a condition regarding the attribute information on the piece of the content that can be used.

9. An information processing method comprising:

a content receiving step of receiving content including encrypted content data and attribute information;

a content storing step of storing the content;

a license receiving step of receiving a license including an attribute condition defining a condition regarding the attribute information on a piece of the content that can be used;

a license storing step of storing the license;

a determining step of determining whether the attribute information on the piece of the content meets the attribute condition of the license stored at the license storing step;

a decrypting step of decrypting the encrypted content data of the piece of the content based on the determination at the determining step that the attribute information on the piece of the content meets the attribute condition of the license; and

an outputting step of outputting the content data decrypted at the decrypting step.

10. A program for causing a computer to execute:

a content receiving step of receiving content including encrypted content data and attribute information;

a content storing step of storing the content;

a license receiving step of receiving a license including an attribute condition defining a condition regarding the attribute information on a piece of the content that can be used;

a license storing step of storing the license;

a determining step of determining whether the attribute information on the piece of the content meets the attribute condition of the license stored at the license storing step;

a decrypting step of decrypting the encrypted content data of the piece of the content based on the determination at the determining step that the attribute information on the piece of the content meets the attribute condition of the license; and

an outputting step of outputting the content data decrypted at the decrypting step.

11. A program storage medium containing a program to cause a computer to execute:

a content receiving step of receiving content including encrypted content data and attribute information;

a content storing step of storing the content;

a license receiving step of receiving a license including an attribute condition defining a condition regarding the attribute information on a piece of the content that can be used;

a license storing step of storing the license;

a determining step of determining whether the attribute information on the piece of the content meets the attribute condition of the license stored at the license storing step;

a decrypting step of decrypting the encrypted content data of the piece of the content based on the determination at the determining step that the attribute information on the piece of the content meets the attribute condition of the license; and
an outputting step of outputting the content data decrypted at the decrypting step.

# FIG. 1

CLIENT 1-1

CLIENT 1-2

INTERNET 2

CONTENT SERVER 3

LICENSE SERVER 4

ACCOUNTING SERVER 5

EP 1 453 240 A1

## FIG. 2

# FIG. 3

START DOWNLOAD
PROCESSING BY CLIENT

ACCESS CONTENT SERVER — S1

SEND CONTENT ID — S2

RECEIVE CONTENT — S3

STORE CONTENT — S4

END

# FIG. 4

```
        ╭─────────────────────────╮
        │  START PROCESSING BY    │
        │    CONTENT SERVER       │
        ╰─────────────────────────╯
                     │
         ┌───────────┤
         │           ▼
         │      ╱─────────────────────────╲      S21
         │     ╱  ACCESSED FROM CLIENT ?    ╲
    No   └─────╲                            ╱
               ╲─────────────────────────╱
                     │ Yes
                     ▼
        ┌─────────────────────────┐  S22
        │     FETCH CONTENT ID    │
        └─────────────────────────┘
                     │
                     ▼
        ┌─────────────────────────┐  S23
        │     READ SPECIFIED      │
        │     CONTENT DATA        │
        └─────────────────────────┘
                     │
                     ▼
        ┌─────────────────────────┐  S24
        │   ENCRYPT CONTENT DATA  │
        └─────────────────────────┘
                     │
                     ▼
        ┌─────────────────────────┐  S25
        │ ATTACH KEY REQUIRED FOR │
        │ DECRYPTION AND ATTRIBUTE│
        │ INFORMATION TO HEADER   │
        └─────────────────────────┘
                     │
                     ▼
        ┌─────────────────────────┐  S26
        │   ATTACH HEADER TO      │
        │   ENCRYPTED CONTENT     │
        │   TO OUTPUT             │
        └─────────────────────────┘
                     │
                     ▼
             ╭─────────────╮
             │     END     │
             ╰─────────────╯
```

# FIG. 5

| Header | Data |
|---|---|

| Encryption Block1 | Encryption Block2 | Encryption Block3 | ... |
|---|---|---|---|

| Attribute List | Signature | EKB | $K_R(Kc)$ |
|---|---|---|---|

| IV | Seed | $E_{K'c}(data)$ |
|---|---|---|

| CID | Codec,etc... |
|---|---|

| Usage rules/status | URL |
|---|---|

CBC mode
$K'c=Hash(Kc,Seed)$

EP 1 453 240 A1

# FIG. 6

| ATTRIBUTE ITEM | DESCRIPTIONS |
| --- | --- |
| CID | CONTENT ID |
| RCID | RECORD COMPANY ID |
| CIID | CONTENT ISSUER ID |
| AID | ARTIST ID |
| RelDate | RELEASE DATE |
| GID | GENRE ID |
| LID | LABEL ID |
| SID | SUBSCRIPTION ID |
| URL | URL OF LICENSE SERVER |

# FIG. 7

| |
| --- |
| LICENSE ID |
| TIME STAMP |
| EXPIRATION DATE |
| ATTRIBUTE CONDITION |
| USAGE RULE |
| DIGITAL SIGNATURE |

# FIG. 8

START REPRODUCING
PROCESSING BY CLIENT

S41 — READ ATTRIBUTE
INFORMATION OF CONTENT
SPECIFIED BY USER

S42 — LICENSE SATISFYING ATTRIBUTE
CONDITION CORRESPONDING TO
READ ATTRIBUTE INFORMATION
IS ACQUIRED?

No → S43 DISPLAY MESSAGE
PROMPTING ACQUISITION
OF LICENSE

Yes

S44 — LICENSE IS UNEXPIRED?

No → S45 DISPLAY MESSAGE
PROMPTING UPDATE
OF LICENSE

Yes

S46 READ STORED CONTENT

S47 — SIGNATURES OF LICENSE AND
CONTENT ARE VALID?
(VERIFY SIGNATURES OF LICENSE
AND CONTENT WITH PUBLIC
KEY OF LICENSE SERVER)

No

Yes

S48 DECRYPT CONTENT

S50 ERROR PROCESSING

S49 OUTPUT CONTENT

END

# FIG. 9

CLIENT                                    LICENSE SERVER

CONTENT
SPECIFICATION          LICENSE LIST REQUEST (CONTENT ID)

                                          EXTRACT LICENSE
                                          CORRESPONDING
                              LICENSE LIST     TO CONTENT

LICENSE                       SSL Session
SELECTION
                       LICENSE REQUEST
                       (RIGHT OF USE ID, TERMINAL ID, UID, PW)

                              LICENSE          } LICENSE ISSUING
                                                 PROCESSING

# FIG. 10

CLIENT                                    LICENSE SERVER

SEARCH
CONDITION              LICENSE LIST REQUEST
SPECIFICATION          (SEARCH CONDITION)

                                          EXTRACT LICENSE
                                          SATISFYING SEARCH
                              LICENSE LIST     CONDITION

LICENSE                       SSL Session
SELECTION
                       LICENSE REQUEST
                       (RIGHT OF USE ID, TERMINAL ID, UID, PW)

                              LICENSE          } LICENSE ISSUING
                                                 PROCESSING

# FIG. 11

# FIG. 12

```
        ┌─────────────────────────┐
        │    START PROCESSING     │
        │    BY LICENSE SERVER    │
        └────────────┬────────────┘
                     │
                     ▼
   ┌──────────────────────────────┐ S102
   │ OBTAIN LICENSE ID, TERMINAL  │
   │ ID, USER ID, AND PASSWORD    │
   │ CONTAINED IN LICENSE REQUEST │
   └──────────────┬───────────────┘
                  │
                  ▼
   ┌──────────────────────────────┐ S103
   │ REQUEST ACCOUNTING SERVER    │
   │ TO PERFORM AUTHORIZATION     │
   │ PROCESSING                   │
   └──────────────┬───────────────┘
                  │
                  ▼                        S110
      ◇─────────────────────◇      ┌──────────────────┐
     < AUTHORIZATION  OK?    >─────►│ ERROR PROCESSING │
      ◇─────────────────────◇  No  └────────┬─────────┘
                  │ Yes                      │
                  ▼         S104             │
   ┌──────────────────────────────┐ S105     │
   │ ADD TERMINAL ID TO USAGE     │          │
   │ RULE AND PUT                 │          │
   │ SIGNATURE WITH PRIVATE       │          │
   │ KEY OF LICENSE SERVER        │          │
   └──────────────┬───────────────┘          │
                  │                          │
                  ▼                          │
   ┌──────────────────────────────┐ S107     │
   │         SEND LICENSE         │          │
   └──────────────┬───────────────┘          │
                  │                          │
                  ▼                          │
   ┌──────────────────────────────┐ S108     │
   │ STORE LICENSE SO AS TO BE    │          │
   │ ASSOCIATED WITH USER ID      │          │
   │ AND PASSWORD                 │          │
   └──────────────┬───────────────┘          │
                  │                          │
                  ▼                          │
   ┌──────────────────────────────┐ S109     │
   │    ACCOUNTING PROCESSING     │          │
   └──────────────┬───────────────┘          │
                  │◄─────────────────────────┘
                  ▼
        ┌─────────────────────────┐
        │           END           │
        └─────────────────────────┘
```

# FIG. 13

CLIENT          LICENSE SERVER          CONTENT SERVER

LICENSE
SPECIFICATION

CONTENT LIST REQUEST
(LICENSE ID)

EXTRACT CONTENT
CAN BE USED BASED
ON LICENSE ID

CONTENT LIST

CONTENT
SPECIFICATION

CONTENT REQUEST

OBTAIN CONTENT
CORRESPONDING
TO CONTENT ID

CONTENT

FIG. 14

# FIG. 15

FIG. 16

ACCOUNTING SERVER — 5

AUTHORIZATION ↕ GRANTING/ NONGRANTING OF LICENSE

1

1-1A

UID:foobar
Passwd:xxx

1-1B

UID:foobar
Passwd:xxx

UID, Passwd →

License ←

· KEY
· Validity
· Capability
· Limitations

LICENSE SERVER

4

EP 1 453 240 A1

## INTERNATIONAL SEARCH REPORT

| | International application No. |
|---|---|
| | PCT/JP02/12356 |

**A. CLASSIFICATION OF SUBJECT MATTER**
    Int.Cl$^7$  H04L9/08, G06F17/60, G06F15/00

According to International Patent Classification (IPC) or to both national classification and IPC

**B. FIELDS SEARCHED**

Minimum documentation searched (classification system followed by classification symbols)
    Int.Cl$^7$  H04L9/08, G06F17/60, G06F15/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)
    JICST FILE(JOIS), WPI, INSPEC(DIALOG), content, attribute, metadata

**C. DOCUMENTS CONSIDERED TO BE RELEVANT**

| Category* | Citation of document, with indication, where appropriate, of the relevant passages | Relevant to claim No. |
|---|---|---|
| Y | JP 7-74744 A  (Waseda University), 17 March, 1995 (17.03.95), Par. Nos. [0022], [0052] to [0053] (Family: none) | 1-5,9-11 |
| Y | JP 2000-293439 A  (Fujitsu Ltd.), 20 October, 2000 (20.10.00), Par. Nos. [0069], [0107] to [0108] (Family: none) | 1-5,9-11 |
| Y | "Juraigata Mole o Kakucho shita Online Contents Hanbai System", Information Processing Society of Japan Kenkyu Hokoku, Vol.99, No.11, pages 87 to 93 (99-EIP-3), 30 January, 1999 (30.01.99), 4.3.1 Kenri Hogo Contents Kozo | 2 |

[X] Further documents are listed in the continuation of Box C.      ☐ See patent family annex.

| | |
|---|---|
| * Special categories of cited documents: <br> "A" document defining the general state of the art which is not considered to be of particular relevance <br> "E" earlier document but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 07 March, 2003 (07.03.03) | 18 March, 2003 (18.03.03) |

| Name and mailing address of the ISA/ <br>    Japanese Patent Office | Authorized officer |
|---|---|
| Facsimile No. | Telephone No. |

Form PCT/ISA/210 (second sheet) (July 1998)

## INTERNATIONAL SEARCH REPORT

| | International application No. |
|---|---|
| | PCT/JP02/12356 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 7-105231 A   (Nippon Telegraph And Telephone Corp.), 21 April, 1995 (21.04.95), Par. No. [0026] (Family: none) | 1-5,9-11 |
| A | JP 2000-188744 A  (Kabushiki kaisha Jisedai Joho Hoso System Kenkyusho), 04 July, 2000 (04.07.00), Par. Nos. [0079] to [0085] (Family: none) | 1-5,9-11 |
| A | EP 1107137 A2   (International Business Machines Corp.), 13 June, 2000 (13.06.00), All pages & JP 2001-274788 A       & CN 1306259 A | 1-5,9-11 |
| A | US 2001/0042111 A1  (Matsushita Electric Industrial Co., Ltd.), 15 November, 2001 (15.11.01), All pages & EP 116084 A2          & JP 2001-318848 A & CN 1326145 A | 1-5,9-11 |

Form PCT/ISA/210 (continuation of second sheet) (July 1998)

## INTERNATIONAL SEARCH REPORT

International application No.

PCT/JP02/12356

**Box I    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II    Observations where unity of invention is lacking (Continuation of item 3 of first sheet)**

This International Searching Authority found multiple inventions in this international application, as follows:

```
   The inventions of claims of the present application are divided into
the following three groups:
1. Claims 1-5, 9-11
2. Claims 6,7
3. Claim 8
```

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1-5, 9-11

**Remark on Protest**    ☐    The additional search fees were accompanied by the applicant's protest.

☐    No protest accompanied the payment of additional search fees.

Form PCT/ISA/210 (continuation of first sheet (1)) (July 1998)